# EUROPEAN PATENT APPLICATION

(11) **EP 4 621 299 A1**
(43) Date of publication of application: **24.09.2025**
(21) Application number: 23919328.7
(22) Date of filing: 19.09.2023
(51) Int. Cl.: F24F 1/0014, F24F 11/88, F24F 11/79, F24F 13/20, F24F 13/14, F24F 13/00, F24F 11/74, F24F 13/02, F24F 1/0057

(54) **WALL-MOUNTED AIR CONDITIONER**

(30) Priority: 31.01.2023 CN 202320183522 U
(71) Applicant: Ningbo Aux Electric Co., Ltd., Ningbo, Zhejiang 315191 (CN); Aux Air Conditioner Co., Ltd., Ningbo, Zhejiang 315191 (CN)
(72) Inventor: ZHANG, Yin, Ningbo, Zhejiang 315191 (CN); SHANG, Bin, Ningbo, Zhejiang 315191 (CN); LI, Binbin, Ningbo, Zhejiang 315191 (CN)
(74) Representative: Gamba, Alessandro
(86) International application number: PCT/CN2023/119813
(87) International publication number: WO 2024/159764

(57) **Abstract**

The present application relates to the technical field of air conditioners. Provided is a wall-mounted air conditioner. In the present application, an air outlet area is arranged on a front panel and air vents are formed in the air outlet area, so that the front panel not only has the effects of protecting the internal structure of the air conditioner and decorating but also has a certain air outlet effect. Arranging the air outlet area on the front panel enables the wall-mounted air conditioner to output air via both an air outlet and the air vents, thus achieving a larger total air output volume. While ensuring the temperature regulation efficiency, the arrangement further ensures more uniform air output, thereby helping to reduce the draft sense and improving user comfort. In addition, the selection of operating modes for the wall-mounted air conditioner is more flexible, and reducing (or even closing) the air output from the air outlet and outputting more air via the air vents in the front panel significantly reduce the draft sense, thereby achieving a "low-draft-sense mode". In the present application, the air outlet area accounts for 28-32% of the total area of the front panel, thus balancing both the air output efficiency and attractiveness.

## Description

The present invention claims the priority to the Chinese patent application with the filing No. CN202320183522.4 filed with the Chinese Patent Office on January 31, 2023, the contents of which are incorporated herein by reference in entirety.

### Technical Field

The present invention relates to the technical field of air conditioners, in particular to a wall-mounted air conditioner.

### Background Art

In existing air conditioners, especially wall-mounted air conditioners, the cross-sectional area of the air discharge channel is limited due to size constraints, and the airflow discharged through the air outlet has a strong draft sensation. Users are prone to discomfort when directly blown by strong airflow for a long time, resulting in poor user comfort.

### Summary

The problem to be solved by the present invention is to enhance user comfort by improving the air discharge effect of a wall-mounted air conditioner.

To solve the above-mentioned problem, in a first aspect, the present invention provides a wall-mounted air conditioner, including a housing assembly and a fan arranged within the housing assembly. An air outlet is formed on the housing assembly, an air discharge channel is formed between the fan and the air outlet, the housing assembly includes a front panel, the front panel has an air discharge region, the air discharge region accounts for 28% to 32% of the total area of the front panel, a plurality of air discharge holes are provided on the air discharge region, and the air discharge holes communicate the outer side of the front panel with the air discharge channel.

In an embodiment of the present invention, by providing an air discharge region on the front panel and arranging air discharge holes in the air discharge region, the front panel not only serves to protect the internal structure of the air conditioner and provide decoration but also achieve a certain air discharge effect. Driven by the fan, airflow passes through the air discharge channel, with part of the airflow being discharged from the air outlet and another part being discharged from a plurality of air discharge holes. The airflow discharged from the air outlet has a large volume, meeting the demand for rapid temperature adjustment, while the airflow discharged from the plurality of air discharge holes is more uniform with weaker direct-blowing sensation, resulting in enhanced user comfort. By providing an air discharge region on the front panel, the wall-mounted air conditioner can discharge air through both the air outlet and the air discharge holes simultaneously, resulting in a larger total air discharge volume. While ensuring temperature adjustment efficiency, this further makes the air discharge more uniform, which is beneficial to reducing the draft sensation and enhancing user comfort. Additionally, the operation modes of the wall-mounted air conditioner are more flexible. By reducing (or even closing) the air discharge from the air outlet and increasing air discharge through the air discharge holes of the front panel, the draft sensation can be reduced to a greater extent, achieving a "low-draft-sensation mode". In an embodiment of the present invention, the air discharge region accounts for 28% to 32% of the total area of the front panel, which can balance air discharge efficiency and aesthetics.

In an optional embodiment, an air inlet is further formed on the housing assembly, an air intake channel is formed between the fan and the air inlet, the front panel is further provided with an air intake region, a plurality of air intake holes are provided on the air intake region, and the air intake holes communicate the outer side of the front panel with the air intake channel.

In this embodiment, by providing an air intake region on the front panel and arranging a plurality of air intake holes in the air intake region, the front panel is enabled to achieve a certain air intake effect, thereby increasing the overall air intake volume of the wall-mounted air conditioner.

In an optional embodiment, the air intake region accounts for 38% to 42% of the total area of the front panel.

In an optional embodiment, the front panel is further provided with an air-impermeable region, which avoids the air intake channel and the air discharge channel, and is impermeable to air.

Since the front panel should also serve to protect the internal structure of the air conditioner, the area of the front panel that does not require air intake or discharge (i.e., the area avoiding the air intake channel and air discharge channel) is arranged as an air-impermeable region. The air-impermeable region, being impermeable to air, provides good protection.

In an optional embodiment, the air intake region is arranged above the air discharge region, the air-impermeable region includes a first air-impermeable region and a second air-impermeable region, the first air-impermeable region is located on one side of the air intake region and the air discharge region in the horizontal direction, and the second air-impermeable region is located on the other side of the air intake region and the air discharge region in the horizontal direction.

Since wall-mounted air conditioners typically intake air from the upper side and discharge air from the lower side, the air intake channel and the air discharge channel are also arranged vertically. Correspondingly, the air intake region of the front panel is arranged above the air discharge region, so that the air intake region corresponds to the air intake channel and the air discharge region corresponds to the air discharge channel. The regions where neither the air intake channel nor the air discharge channel is provided are the two end regions of the wall-mounted air conditioner in the horizontal direction. Therefore, the first air-impermeable region and the second air-impermeable region are located on both sides of the air intake region and the air discharge region in the horizontal direction to avoid the air intake channel and the air discharge channel.

In an optional embodiment, the air-impermeable region accounts for 28% to 32% of the total area of the front panel.

In an optional embodiment, the wall-mounted air conditioner further includes an electronic control assembly arranged within the housing assembly, and the electronic control assembly is positioned corresponding to the air-impermeable region of the front panel. In this embodiment, the electronic control assembly is positioned corresponding to the air-impermeable region of the front panel. Since the air-impermeable region is impermeable to air, it reduces the flow of cold/hot air, so that condensed water is less likely to form on the electronic control assembly, providing better protection for the electronic control assembly.

In an optional embodiment, the outer surface of the front panel is provided with a plurality of decorative holes, which are blind holes and distributed in the air-impermeable region. When both the air intake region and the air discharge region are provided with hole structures, arranging a plurality of decorative holes in the air-impermeable region can make the overall front panel more coordinated and aesthetically pleasing. Since the air-impermeable region does not require air permeability, the decorative holes are blind holes.

In an optional embodiment, wind barrier ribs are convexly provided on the inner side of the front panel and arranged at the edge of the air discharge region to separate the air discharge region from the air intake region and the air-impermeable region. By providing wind barrier ribs, airflow can be prevented from flowing into the air intake region or the air-impermeable region from the air discharge region during air discharge, so that each region can independently and stably perform its respective function. Additionally, the wind barrier ribs can improve the overall strength of the front panel.

In an optional embodiment, the wall-mounted air conditioner further includes a middle frame arranged within the housing assembly, the fan is fixed to the middle frame, and the wind barrier ribs abut against the middle frame. By abutting the wind barrier ribs against the middle frame, the wind-blocking effect of the wind barrier ribs can be improved, preventing uncontrolled airflow movement between different regions. Additionally, the wind barrier ribs abutting against the middle frame can increase the stability of the front panel when installed on the middle frame.

In an optional embodiment, the wind barrier ribs include two vertical ribs and one transverse rib, a lower edge of the front panel defines an edge of the air outlet, the two vertical ribs define two opposite edges of the air discharge region in a horizontal direction, one end of each vertical rib extends to the lower edge of the front panel, and a spacing distance between the two vertical ribs is identical to a width of the air outlet in the horizontal direction.

In this embodiment, since the spacing width between the two vertical ribs is identical to the horizontal width of the air outlet, the width of the air discharge region is comparable to that of the air outlet, avoiding the limitation of air discharge effect due to too small width of the air discharge region, or too low wind speed caused by too wide dispersion of airflow due to too large width of the air discharge region, or affecting other components (such as electronic control assembly) in the wall-mounted air conditioner due to diffusion to other parts.

In an optional embodiment, the density of the air intake holes in the air intake region is less than that of the air discharge holes in the air discharge region.

In an optional embodiment, the density of hole structures on the front panel gradually decreases from bottom to top, and the hole structures include air intake holes and air discharge holes. In this embodiment, since the intensity of the air discharge flow gradually decreases upward from the air outlet, the distribution density of the hole structures on the front panel gradually decreases from the end close to the air outlet (i.e., the lower end) to the end away from the air outlet (i.e., the upper end), which is beneficial to ensuring air discharge efficiency. At the same time, the gradual change in density can also improve the aesthetics of the front panel.

### Brief Description of Drawings

FIG. 1 is a schematic diagram of a wall-mounted air conditioner according to an embodiment of the present invention;
FIG. 2 is a first sectional view of a wall-mounted air conditioner according to an embodiment of the present invention;
FIG. 3 is a second sectional view of the wall-mounted air conditioner according to an embodiment of the present invention;
FIG. 4 is an enlarged view of part IV in FIG. 2;
FIG. 5 is an enlarged view of part V in FIG. 2;
FIG. 6 is an enlarged view of part VI in FIG. 2; and
FIG. 7 is an enlarged view of part VII in FIG. 3.

Reference numerals: 010- Wall-mounted air conditioner; 100- Housing assembly; 101- Air outlet; 102- Air inlet; 110- Front panel; 111- Air discharge region; 112- Air discharge hole; 113- Air intake region; 114- Air intake hole; 115- First air-impermeable region; 116- Second air-impermeable region; 117-Decorative hole; 118- First snap-fit member; 120- Transverse rib; 121-Transverse sub-rib; 122- Groove; 130- Vertical rib; 131- Vertical sub-rib; 140-Abutment boss; 200- Middle frame; 210- Horizontal protrusion; 220- Second snap-fit member; 300- Air discharge assembly.

### Detailed Description of Embodiments

Existing wall-mounted air conditioners have an air inlet provided at the top and an air outlet provided at the bottom. During use, the fan guides airflow to enter from the air inlet, pass through the air intake channel, the fan, and the air discharge channel, and then be discharged from the air outlet. When such an air conditioner is in use, the airflow can only be discharged from the air outlet, resulting in concentrated airflow and obvious draft sensation, leading to poor comfort.

To address the above-mentioned shortcomings of existing wall-mounted air conditioners, an embodiment of the present invention provides a wall-mounted air conditioner. By providing an air discharge region on the front panel and arranging a plurality of air discharge holes in the air discharge region, the airflow in the air discharge channel can be discharged from the air discharge holes of the front panel, that is, an additional air discharge path is added, which improves the cooling effect, and makes the airflow not concentratedly discharged from the air outlet, resulting in more uniform air discharge and smaller draft sensation, thus enhancing user comfort.

To make the above-mentioned objectives, features, and advantages of the present invention more obvious and understandable, specific embodiments of the present invention will be described in detail below with reference to the accompanying drawings.

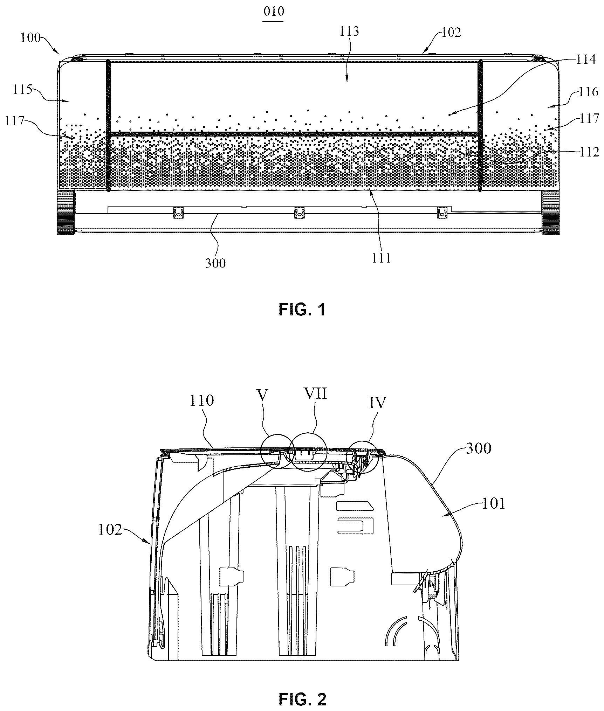

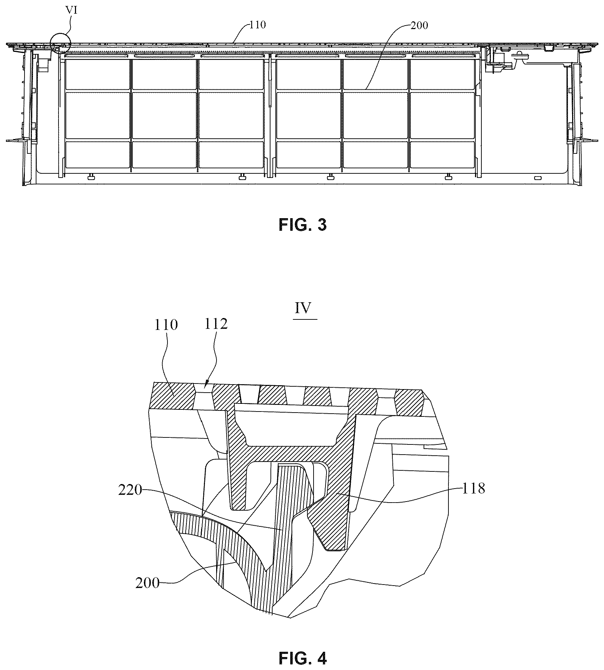

FIG. 1 is a schematic diagram of a wall-mounted air conditioner 010 according to an embodiment of the present invention; FIG. 2 is a first sectional view of the wall-mounted air conditioner 010 according to an embodiment of the present invention; and FIG. 3 is a second sectional view of the wall-mounted air conditioner 010 according to an embodiment of the present invention. As shown in FIGS. 1 to 3, the wall-mounted air conditioner 010 provided in this embodiment includes a housing assembly 100, and a middle frame 200 and a fan (not shown) arranged within the housing assembly 100. The middle frame 200 serves as the main supporting structure of the wall-mounted air conditioner 010, and both the fan and the housing assembly 100 are connected to the middle frame 200. An air outlet 101 and an air inlet 102 are formed on the housing assembly 100. An air discharge channel is formed between the fan and the air outlet 101, and an air intake channel is formed between the fan and the air inlet 102. When the fan is in normal operation, the airflow can enter the air intake channel from the air inlet 102, pass through the air intake channel, the fan, and the air discharge channel, and then be discharged from the air outlet 101.

In this embodiment, a heat exchanger (not shown in the figures) is further arranged within the housing assembly 100. The heat exchanger exchanges heat with the airflow to lower or raise the temperature of the airflow, thereby achieving the effect of cooling or heating. The heat exchanger may be arranged in the path through which the airflow passes. For example, it is arranged in the air discharge channel or the air intake channel, or surrounds the fan. The middle frame 200 and/or the housing assembly 100 are/is further provided with an air discharge assembly 300, which can be controlled to open or close the air outlet 101 and adjust the direction of the airflow discharged from the air outlet 101.

The wall-mounted air conditioner according to the embodiment of the present invention further includes an electronic control assembly, which is configured to control the fan, the air discharge assembly 300, etc., to make them work according to settings. Optionally, the electronic control assembly includes an electronic control box body and a circuit board, components, etc., arranged within the electronic control box body.

The housing assembly 100 includes a front panel 110. When the wall-mounted air conditioner 010 is installed on a wall, the front panel 110 faces forward. In other words, the front panel 110 is located on the side of the wall-mounted air conditioner 010 away from the wall. In this embodiment, the front panel 110 has an air discharge region 111, an air intake region 113, and an air-impermeable region. The air discharge region 111 is provided with a plurality of air discharge holes 112, which communicate the outer side of the front panel 110 with the air discharge channel. The air intake region 113 is provided with a plurality of air intake holes 114, which communicate the outer side of the front panel 110 with the air intake channel. The air-impermeable region is provided with a plurality of decorative holes 117, which are blind holes and distributed in the air-impermeable region. Specifically, the decorative holes 117 are provided on the outer surface of the front panel 110.

In the embodiment of the present invention, by providing an air discharge region 111 on the front panel 110 and arranging air discharge holes 112 in the air discharge region 111, the front panel 110 not only serves to protect the internal structure of the air conditioner and provide decoration, but also achieve a certain air discharge effect. Driven by the fan, the airflow passes through the air discharge channel, with part of the airflow being discharged from the air outlet 101 and another part being discharged from the plurality of air discharge holes 112. The airflow discharged from the air outlet 101 has a large volume, meeting the demand for rapid temperature adjustment, while the airflow discharged from the plurality of air discharge holes 112 is more uniform with weaker direct-blowing sensation, resulting in enhanced user comfort. By providing an air discharge region 111 on the front panel 110, the wall-mounted air conditioner can discharge air through both the air outlet 101 and the air discharge holes 112 simultaneously, resulting in a larger total air discharge volume. While ensuring temperature adjustment efficiency, this further makes the air discharge more uniform, which is beneficial to reducing the draft sensation and enhancing user comfort. Additionally, the operation modes of the wall-mounted air conditioner 010 are more flexible. By reducing (or even closing) the air discharge from the air outlet 101 and increasing air discharge through the air discharge holes 112 of the front panel 110, the draft sensation can be reduced to a greater extent, achieving a "low-draft-sensation mode".

By providing an air intake region 113 on the front panel 110 and providing a plurality of air intake holes 114 in the air intake region 113, the front panel 110 is enabled to achieve a certain air intake effect, thereby increasing the overall air intake volume of the wall-mounted air conditioner 010.

In this embodiment, the air-impermeable region avoids the air intake channel and the air discharge channel and is impermeable to air. Since the front panel 110 should also serve to protect the internal structure of the air conditioner, the region of the front panel 110 that does not require air intake or discharge (i.e., the region avoiding the air intake channel and air discharge channel) is arranged as an air-impermeable region. The air-impermeable region, being impermeable to air, provides good protection. In this embodiment, when both the air intake region 113 and the air discharge region 111 are provided with hole structures, arranging a plurality of decorative holes 117 in the air-impermeable region can make the overall front panel 110 more coordinated and aesthetically pleasing. Since the air-impermeable region does not require air permeability, the decorative holes 117 are blind holes.

In this embodiment, the air intake region 113 is arranged above the air discharge region 111. The air-impermeable region includes a first air-impermeable region 115 and a second air-impermeable region 116. The first air-impermeable region 115 is located on one side of the air intake region 113 and the air discharge region 111 in the horizontal direction, and the second air-impermeable region 116 is located on the other side of the air intake region 113 and the air discharge region 111 in the horizontal direction. In the wall-mounted air conditioner 010 of this embodiment, air is taken in from the upper side and discharged from the lower side, and the lower end of the front panel 110 constitutes the upper edge of the air outlet 101. Therefore, the air intake channel and the air discharge channel are also arranged vertically, and correspondingly, the air intake region 113 of the front panel 110 is arranged above the air discharge region 111, so that the air intake region 113 corresponds to the air intake channel and the air discharge region 111 corresponds to the air discharge channel. Further, in this embodiment, the air intake region 113 and the air discharge region 111 have the same width in the horizontal direction. However, the regions where neither the air intake channel nor the air discharge channel is provided are the two end regions of the wall-mounted air conditioner 010 in the horizontal direction. Therefore, the first air-impermeable region 115 and the second air-impermeable region 116 are located on both sides of the air intake region 113 and the air discharge region 111 in the horizontal direction to avoid the air intake channel and the air discharge channel. In this embodiment, taking the perspective of FIG. 1 as an example, the first air-impermeable region 115 is on the left side of the entire front panel 110, and the second air-impermeable region 116 is on the right side of the entire front panel 110.

In this embodiment, the electronic control assembly is positioned corresponding to the air-impermeable region of the front panel 110. Since the air-impermeable region is impermeable to air, it reduces the flow of cold/hot air, so that condensed water is less likely to form on the electronic control assembly, providing better protection for the electronic control assembly. In an optional embodiment, the electronic control assembly is arranged on the right side of the fan, so the area of the second air-impermeable region 116 on the right side is larger than that of the first air-impermeable region 115, and the second air-impermeable region 116 is configured to cover the electronic control assembly. Specifically, the electronic control assembly may be connected to the inner surface of the front panel 110 or the middle frame 200.

In this embodiment, the density of the air intake holes 114 in the air intake region 113 is less than that of the air discharge holes 112 in the air discharge region 111. Further, as shown in FIG. 1, the density of hole structures on the front panel 110 gradually decreases from bottom to top, and the hole structures include air intake holes 114, air discharge holes 112, and decorative holes 117. In this embodiment, since the intensity of the air discharge flow gradually decreases upward from the air outlet 101, the distribution density of the hole structures on the front panel 110 gradually decreases from the end close to the air outlet 101 (i.e., the lower end) to the end away from the air outlet 101 (i.e., the upper end), which is beneficial to ensuring air discharge efficiency. Meanwhile, the gradual change in density can also improve the aesthetics of the front panel 110.

Of course, in other optional embodiments, the distribution density of the hole structures on the front panel 110 may also be uniform, or the hole structures are uniform within each different region, with different distribution densities in different regions.

In this embodiment, the air discharge region 111 accounts for 28% to 32% of the total area of the front panel 110, which balances air discharge efficiency and aesthetics. Further, the air intake region 113 accounts for 38% to 42% of the total area of the front panel 110, and the air-impermeable region (the sum of the first air-impermeable region 115 and the second air-impermeable region 116) accounts for 28% to 32% of the total area of the front panel 110. In a specific embodiment, the air discharge region 111 accounts for 30% of the area of the front panel 110, the air intake region 113 accounts for 40.4% of the area of the front panel 110, and the air-impermeable region accounts for 29.6% of the total area of the front panel 110.

FIG. 4 is an enlarged view of part IV in FIG. 2. As shown in FIG. 4, the front panel 110 is connected to the middle frame 200 through a snap-fit structure. In this embodiment, the front panel 110 is provided with a first snap-fit member 118, and the middle frame 200 is provided with a second snap-fit member 220. The first snap-fit member 118 and the second snap-fit member 220 are respectively provided with a first protrusion and a second protrusion, and the first protrusion and the second protrusion abut against each other to limit the front panel 110 from moving away from the middle frame 200, thus implementing the snap-fit connection between the front panel 110 and the middle frame 200.

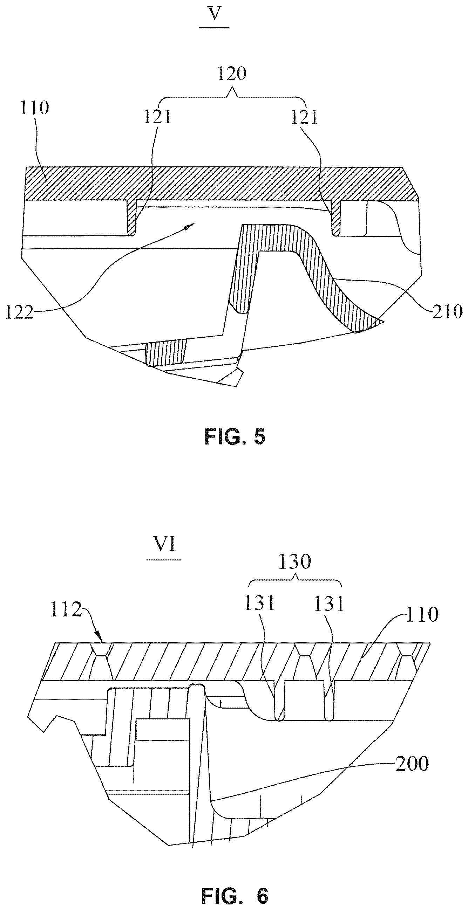

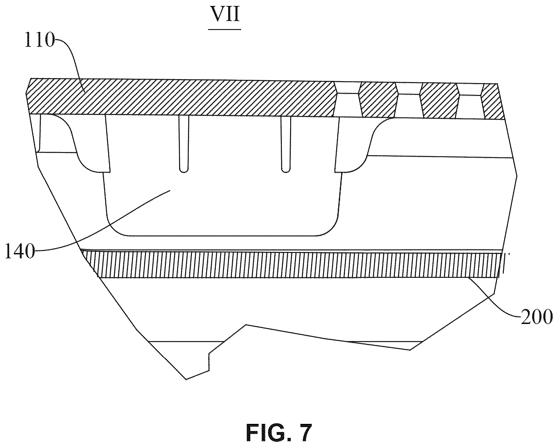

FIG. 5 is an enlarged view of part V in FIG. 2; FIG. 6 is an enlarged view of part VI in FIG. 2; and FIG. 7 is an enlarged view of part VII in FIG. 3. As shown in FIGS. 5 to 7, in this embodiment, wind barrier ribs are convexly provided on the inner side of the front panel 110 and arranged at the edge of the air discharge region 111 to separate the air discharge region 111 from the air intake region 113 and the air-impermeable region. By providing wind barrier ribs, airflow can be prevented from flowing into the air intake region 113 or the air-impermeable region from the air discharge region 111 during air discharge, so that each region can independently and stably perform its respective function. Additionally, the wind barrier ribs can improve the overall strength of the front panel 110.

In an optional embodiment, the wind barrier ribs may abut against the middle frame 200. By abutting the wind barrier ribs against the middle frame 200, the wind-blocking effect of the wind barrier ribs can be improved, preventing uncontrolled airflow movement between different regions. Additionally, the wind barrier ribs abutting against the middle frame 200 can increase the stability of the front panel 110 when installed on the middle frame 200.

In this embodiment, the wind barrier ribs include two vertical ribs 130 and one transverse rib 120. The lower edge of the front panel 110 defines the edge of the air outlet 101, and the two vertical ribs 130 define two opposite edges of the air discharge region 111 in the horizontal direction. One end of each vertical rib 130 extends to the lower edge of the front panel 110, and the other end extends to both ends of the transverse rib 120, so that the wind barrier ribs as a whole surround the air discharge region 111 in an inverted U shape. The vertical ribs 130 can block the lateral flow of air into the air-impermeable region during air discharge, avoiding the airflow from blowing the electronic control assembly or generating condensed water to affect the electronic control assembly. The transverse rib 120 can prevent the airflow from flowing into the air intake region 113 during air discharge and resulting in ineffective internal air circulation, thereby ensuring the air volume discharged from the air discharge region 111.

In this embodiment, the spacing distance between the two vertical ribs 130 is identical to the width of the air outlet 101 in the horizontal direction. Such an arrangement makes the width of the air discharge region 111 comparable to that of the air outlet 101, avoiding the limitation of air discharge effect due to too small width of the air discharge region 111 and insufficient air volume through the air discharge holes 112, or avoiding too low wind speed caused by too wide dispersion of airflow due to too large width of the air discharge region 111, or lateral diffusion to other parts to affect other components (such as electronic control assembly) in the wall-mounted air conditioner 010.

Further, in this embodiment, the transverse rib 120 includes two transverse sub-ribs 121 in parallel and spaced apart, and a groove 122 is formed between the two transverse sub-ribs 121. The middle frame 200 is provided with a horizontal protrusion 210, and the horizontal protrusion 210 is embedded in the groove 122 formed between the two transverse sub-ribs 121. Through the cooperation between the groove 122 and the horizontal protrusion 210, the connection between the middle frame 200 and the front panel 110 is more compact, and the relative stability between them is improved. Additionally, the horizontal protrusion 210 further blocks the airflow from flowing from the air discharge region 111 to the air intake region 113.

As shown in FIG. 6, similar to the transverse rib 120, each vertical rib 130 also includes two vertical sub-ribs 131 arranged in parallel and spaced apart.

As shown in FIG. 7, the inner surface of the front panel 110 is further provided with an abutment boss 140, which can abut against the middle frame 200 when the front panel 110 is close to the middle frame 200, so as to ensure that the front panel 110 is not easily concave inward when subjected to external force, thus enhancing the structural stability.

In summary, in the embodiment of the present invention, by providing an air discharge region 111 on the front panel 110 and arranging air discharge holes 112 in the air discharge region 111, the front panel 110 not only serves to protect the internal structure of the air conditioner and provide decoration but also achieve a certain air discharge effect. Driven by the fan, the airflow passes through the air discharge channel, with part of the airflow being discharged from the air outlet 101 and another part being discharged from the plurality of air discharge holes 112. The airflow discharged from the air outlet 101 has a large volume, meeting the demand for rapid temperature adjustment, while the airflow discharged from the plurality of air discharge holes 112 is more uniform with weaker direct-blowing sensation, resulting in enhanced user comfort. By providing an air discharge region 111 on the front panel 110, the wall-mounted air conditioner can discharge air through both the air outlet 101 and the air discharge holes 112 simultaneously, resulting in a larger total air discharge volume. While ensuring temperature adjustment efficiency, this further makes the air discharge more uniform, which is beneficial to reducing the draft sensation and enhancing user comfort. Additionally, the operation modes of the wall-mounted air conditioner are more flexible. By reducing (or even closing) the air discharge from the air outlet 101 and increasing air discharge through the air discharge holes 112 of the front panel 110, the draft sensation can be reduced to a greater extent, achieving a "low-draft-sensation mode ". In the embodiment of the present invention, the air discharge region 111 accounts for 28% to 32% of the total area of the front panel 110, which balances air discharge efficiency and aesthetics.

Although the present invention is disclosed as above, it is still not limited thereto. Any person skilled in the art may make various changes and modifications without departing from the spirit and scope of the present invention, so the protection scope of the present invention shall be subject to the scope defined by the claims.

## Claims

1. A wall-mounted air conditioner, comprising a housing assembly (100) and a fan arranged within the housing assembly (100), wherein an air outlet (101) is formed on the housing assembly (100), an air discharge channel is formed between the fan and the air outlet (101), the housing assembly (100) comprises a front panel (110), the front panel (110) has an air discharge region (111), the air discharge region (111) accounts for 28% to 32% of a total area of the front panel (110), a plurality of air discharge holes (112) are provided on the air discharge region (111), and the air discharge holes (112) communicate an outer side of the front panel (110) with the air discharge channel.

2. The wall-mounted air conditioner according to claim 1, wherein an air inlet (102) is further formed on the housing assembly (100), an air intake channel is formed between the fan and the air inlet (102), the front panel (110) is further provided with an air intake region (113), a plurality of air intake holes (114) are provided on the air intake region (113), and the air intake holes (114) communicates the outer side of the front panel (110) with the air intake channel.

3. The wall-mounted air conditioner according to claim 2, wherein the air intake region (113) accounts for 38% to 42% of the total area of the front panel (110).

4. The wall-mounted air conditioner according to claim 2, wherein the front panel (110) is further provided with an air-impermeable region, and the air-impermeable region avoids the air intake channel and the air discharge channel and is impermeable to air.

5. The wall-mounted air conditioner according to claim 4, wherein the air intake region (113) is arranged above the air discharge region (111), the air-impermeable region comprises a first air-impermeable region (115) and a second air-impermeable region (116), the first air-impermeable region (115) is located on one side of the air intake region (113) and the air discharge region (111) in a horizontal direction, and the second air-impermeable region (116) is located on the other side of the air intake region (113) and the air discharge region (111) in the horizontal direction.

6. The wall-mounted air conditioner according to claim 4, wherein the air-impermeable region accounts for 28% to 32% of a total area of the front panel (110).

7. The wall-mounted air conditioner according to claim 4, further comprising an electronic control assembly arranged within the housing assembly (100), wherein the electronic control assembly is positioned corresponding to the air-impermeable region of the front panel (110).

8. The wall-mounted air conditioner according to claim 4, wherein wind barrier ribs are convexly provided on an inner side of the front panel (110) and arranged at an edge of the air discharge region (111) to separate the air discharge region (111) from the air intake region (113) and the air-impermeable region.

9. The wall-mounted air conditioner according to claim 8, further comprising a middle frame (200) arranged within the housing assembly (100), wherein the fan is fixed to the middle frame (200), and the wind barrier ribs abut against the middle frame (200).

10. The wall-mounted air conditioner according to claim 9, wherein the wind barrier ribs comprise two vertical ribs (130) and one transverse rib (120), a lower edge of the front panel (110) defines an edge of the air outlet (101), the two vertical ribs (130) define two opposite edges of the air discharge region (111) in a horizontal direction, one end of each vertical rib (130) extends to the lower edge of the front panel (110), and a spacing distance between the two vertical ribs (130) is identical to a width of the air outlet (101) in the horizontal direction.

11. The wall-mounted air conditioner according to claim 2, wherein a density of the air intake holes (114) in the air intake region (113) is less than a density of the air discharge holes (112) in the air discharge region (111).

12. The wall-mounted air conditioner according to claim 11, wherein a density of hole structures on the front panel (110) gradually decreases from bottom to top, and the hole structures comprise the air intake holes (114) and the air discharge holes (112).
